# FASCICULE DE BREVET EUROPEEN

(11) **EP 1 405 002 B1**
(45) Date de publication et mention de la délivrance du brevet: **02.07.2008**
(21) Numéro de dépôt: 02760366.1
(22) Date de dépôt: 28.06.2002
(51) Int. Cl.: F16L 37/084

(54) **CONNECTEUR RAPIDE**
SCHNELLVERBINDER
QUICK CONNECTOR

(30) Priorité: 12.07.2001 FR 0109275
(43) Date de publication de la demande: 07.04.2004
(73) Titulaire: LEGRIS SA, 35000 Rennes (FR)
(72) Inventeur: PODER, Philippe, F-35580 Guichen (FR)
(74) Mandataire: Robert, Jean-Pierre
(86) Numéro de dépôt international: PCT/FR2002/002247
(87) Numéro de publication internationale: WO 2003/008852

(56) Documents cités:
- EP-A- 0 505 930
- EP-A- 0 846 907
- EP-A- 0 992 729
- FR-A- 2 705 431
- US-A- 6 145 886

## Description

La présente invention concerne un connecteur rapide comportant une partie mâle et une partie femelle qui s'accouplent par simple introduction de l'une dans l'autre.

Dans des circuits traversés par des fluides sous pression et qui mettent en oeuvre des connecteurs rapides, il est souhaitable, voire exigé, de mettre en oeuvre des moyens de verrouillage positifs de la connexion. En effet, une connexion mal réalisée est tout d'abord une source de fuites et un risque de désaccouplement dont la conséquence la plus bénigne est de mettre en panne la machine comportant ces circuits de fluide sous pression, et si cette machine est une automobile, d'être une source d'accidents (absence de pression dans les circuits hydrauliques de freinage, fuite de carburant à l'intérieur du compartiment moteur pouvant conduire à un incendie...).

Il existe de nombreux dispositifs de verrouillage de l'élément mâle dans l'élément femelle d'un connecteur rapide. Ils fonctionnent sensiblement tous sur le même principe et mettent en oeuvre un moyen général identique consistant en un organe de clavetage qui s'interpose entre une surface radiale de l'embout (gorge ou collerette) et une surface radiale de l'élément femelle (gorge ou collerette également). Cet organe de clavetage peut être introduit manuellement ou peut être maintenu dans sa position de verrouillage par un organe élastique de rappel à l'encontre de l'effet duquel il peut être placé dans un état escamoté (soit déplacé soit déformé) lors de l'introduction de l'embout.

Dans un mode de réalisation particulièrement simple de ce dispositif présenté dans le document FR 2 705 430, le verrou est constitué par une bague montée à coulissement radial dans un logement ménagé dans la pièce femelle du connecteur, entre une première position de repos et de verrouillage où elle est excentrée par rapport à l'axe de l'alésage de la pièce femelle et une seconde position escamotée où elle est sensiblement coaxiale avec cet alésage.

Un organe élastique constitué par deux languettes en une seule pièce avec la bague, est interposé entre la bague et la pièce femelle et tend à rappeler la bague dans sa première position après le passage de la collerette.

Il apparaît que ce mode de verrouillage n'offre pas assez de garantie quant au bon enfoncement de la pièce mâle dans la pièce femelle. En effet, la pièce mâle peut avoir été enfoncée suffisamment pour que la collerette force la bague à se déplacer à l'encontre des languettes de rappel, mais pas assez pour que la collerette ait dépassé la bague, empêchant ainsi la bague de se positionner en position de verrouillage derrière la collerette sous l'effet des languettes élastiques. Cette situation n'est pas visible de façon flagrante pour l'opérateur, qui peut penser que la connexion a été bien réalisée.

On connaît, des documents EP 505 930, EP 0 846 907, FR 2 705 431 ou US 6 145 886, des connecteurs équipés de témoins de verrouillage attestant du bon verrouillage du connecteur, le témoin de verrouillage étant disposé en aval de l'organe de verrouillage pour être manoeuvré par une collerette après qu'elle a franchi l'organe de verrouillage. Dans les connecteurs illustrés dans ces documents, la partie femelle présente des ouvertures spécifiques pour permettre la coopération entre le témoin et la collerette de la partie mâle lors de son introduction, ce qui affaiblit la partie femelle et en complique la fabrication.

Dans le document EP 0 992 729, le témoin est également disposé de façon axialement décalée par rapport à l'organe de verrouillage, mais en amont de l'organe de verrouillage en extrémité de la partie femelle. Le témoin est manoeuvré non par la collerette de la partie mâle, mais par un accessoire entraîné par la partie mâle lors de son introduction dans la partie femelle, ce qui rend ce type de connecteur plus complexe.

L'invention vise à remédier à ces inconvénients, et a plus précisément pour objet un connecteur rapide comprenant une pièce femelle avec un alésage étagé dont une section de grand diamètre peut accueillir une collerette extérieure d'une pièce mâle du connecteur au-delà d'un verrou, le verrou étant constitué d'une bague ayant un orifice de passage de la collerette de diamètre proche de celui de la collerette, la bague étant montée dans un logement ménagé dans la pièce femelle au niveau de la section de grand diamètre de son alésage pour coulisser radialement dans le logement entre une première position de repos et de verrouillage où l'orifice de la bague est excentré par rapport à l'axe de l'alésage et une seconde position escamotée où l'orifice de passage est sensiblement coaxial avec cet alésage. Selon l'invention, le verrou comporte un témoin de verrouillage monté à coulissement radial dans la bague.

Ainsi, l'intégration du témoin selon l'invention se fait sans qu'il soit besoin de prévoir des ouvertures spécifiques sur la partie femelle du connecteur, et sans pièce ou accessoire additionnels. Le connecteur est donc globalement inchangé, seule la bague étant modifiée pour accueillir le témoin.

Selon un mode de réalisation de l'invention, le témoin de verrouillage est mobile dans la bague entre une première position témoin dans laquelle le témoin de verrouillage n'entrave pas l'orifice de passage de la bague, et une seconde position témoin dans laquelle le témoin de verrouillage entrave ledit orifice de passage.

Pour vérifier si la connexion entre la pièce mâle et la pièce femelle est correctement réalisée, il est demandé à l'opérateur chargé de réaliser la connexion de manoeuvrer le témoin de verrouillage selon l'invention à l'issue de l'introduction de la pièce mâle dans la pièce femelle.

En effet, si le témoin de verrouillage a pu être déplacé dans la seconde position témoin, il entrave l'orifice de passage de la collerette dans la bague. C'est donc le signe indéniable que la collerette ne se trouve plus dans l'orifice, sinon le témoin aurait été bloqué par la présence de la collerette.

Si en revanche, le témoin de verrouillage ne peut être déplacé dans la seconde position, c'est que la pièce mâle n'a pas été assez enfoncée dans la pièce femelle pour que la collerette dépasse la bague.

Ainsi, le témoin de verrouillage joue le rôle d'un témoin de la bonne connexion de la pièce mâle avec la pièce femelle, et permet ainsi de garantir la bonne qualité de la connexion.

Selon un mode de réalisation préféré, le témoin de verrouillage et la bague comportent des moyens d'immobilisation mutuelle lorsque le témoin de verrouillage se trouve dans chacune des positions témoins.

La collerette, en passant dans l'orifice de passage de la bague, pousse le témoin de verrouillage jusqu'à ce qu'il n'entrave plus l'orifice de passage. Le témoin de verrouillage se trouve alors dans la première position témoin, et il est immobilisé par rapport à la bague par les moyens d'immobilisation. Lorsque la collerette a dépassé la bague, cette dernière se déplace dans la position de repos, et le témoin de verrouillage reste fixé dans la première position témoin, jusqu'à être manoeuvré manuellement par l'opérateur vers la seconde position témoin où il est à nouveau immobilisé par rapport à la bague.

Ces moyens d'immobilisation permettent de garantir que le témoin de verrouillage est fixe par rapport à la bague, et ne peut se déplacer entre les deux positions témoins que par une manoeuvre volontaire de l'opérateur.

De préférence, et préalablement à une première connexion, le témoin de verrouillage et la bague sont solidaires l'un de l'autre au moyen d'une liaison temporaire dans une position intermédiaire entre les deux positions témoins, choisie de telle sorte que le témoin de verrouillage entrave l'orifice de passage de la bague.

Ainsi, avant toute connexion, le témoin de verrouillage est maintenu dans une position intermédiaire qui peut être visuellement reconnue et/ou testée en essayant de déplacer légèrement le témoin de verrouillage, de sorte que l'opérateur sait immédiatement si la pièce femelle a déjà servi ou non. Par ailleurs, la bague et le témoin de verrouillage peuvent ainsi être produits en une seule pièce, ce qui simplifie la fabrication et l'assemblage du connecteur.

La liaison temporaire est par exemple constituée par des ligaments joignant la bague et le témoin de verrouillage, ces ligaments étant rompus à la première connexion par le passage de la collerette entre la bague et le témoin de verrouillage.

Selon une caractéristique de l'invention, la position intermédiaire est telle que la distance entre le témoin de verrouillage et l'embout de la pièce mâle est inférieure à une course de déplacement de la bague dans le logement.

Ainsi, au cas où la pièce mâle et enfoncée dans la pièce femelle sans que la collerette ne passe dans l'orifice de passage, l'appui de l'opérateur sur le témoin de verrouillage aura pour conséquence d'enfoncer la bague à l'encontre des languettes flexibles. Le témoin de verrouillage va alors venir en butée contre l'embout de la pièce mâle, avant que la bague vienne en butée au fond du logement. La liaison temporaire entre la bauge et le témoin de verrouillage ne sera pas rompue, et quand l'opérateur va cesser son appui sur le témoin de verrouillage, ce dernier va remonter avec la bague. L'opérateur a ainsi la preuve visuelle que la connexion est mal réalisée.

Selon un aspect de l'invention, le témoin de verrouillage comporte une partie de manoeuvre en saillie extérieure de la pièce femelle lorsque le témoin de verrouillage est dans la première position, et sensiblement escamoté dans la pièce femelle lorsque le témoin de verrouillage est dans la seconde position.

La partie de manoeuvre comporte une ouverture d'introduction d'un outil de manoeuvre et accessible lorsque le témoin de verrouillage est dans la seconde position témoin.

La partie de manoeuvre étant enfoncée dans la pièce femelle, il n'est plus possible de la saisir avec les doigts pour manoeuvrer le témoin de verrouillage. Pour manoeuvrer ce dernier, il faut introduire un outil dans l'ouverture, grâce à un dégagement arrière ménagé dans la pièce femelle permettant l'accès pour l'outil à l'ouverture.

Le témoin de verrouillage comporte également des ailes s'étendant de la partie de manoeuvre vers l'intérieur du logement de la bague, les ailes étant partiellement en regard des parois de fond du logement au moins lorsque le témoin de verrouillage est dans la seconde position témoin.

L'invention sera mieux comprise à la lumière de la description d'un mode de réalisation de l'invention, en référence aux figures annexées parmi lesquelles :
- la figure 1 est une vue en coupe longitudinale selon la ligne I-I de la figure 3 d'un connecteur rapide selon l'invention, la pièce mâle étant introduite dans la pièce femelle, la bague étant en position de repos tandis que le témoin de verrouillage est dans la première position témoin ;
- la figure 2 est une vue en coupe du connecteur rapide selon la ligne II-II de la figure 1 passant au travers du logement de la bague et du témoin de verrouillage, la pièce mâle ayant été enlevée, la bague étant en position de repos tandis que le témoin de verrouillage est dans une position intermédiaire entre les première et seconde position témoin ;
- la figure 3 est une vue analogue à la figure 2, lors de l'enfoncement d'une pièce mâle dans la pièce femelle; la bague étant en position escamotée tandis que le témoin de verrouillage est dans la première position témoin ;
- la figure 4 est une vue analogue à la figure 2, à la fin de l'enfoncement de la pièce mâle dans la pièce femelle la bague étant en position de repos tandis que le témoin de verrouillage est dans la première position témoin;
- la figure 5 est une vue analogue à la figure 2, après manoeuvre du témoin de verrouillage dans la seconde position témoin, la bague étant dans la position de repos ;
- la figure 6 est une vue analogue à la figure 2, présentant une situation dans laquelle seul l'embout de la pièce mâle a été enfoncé.

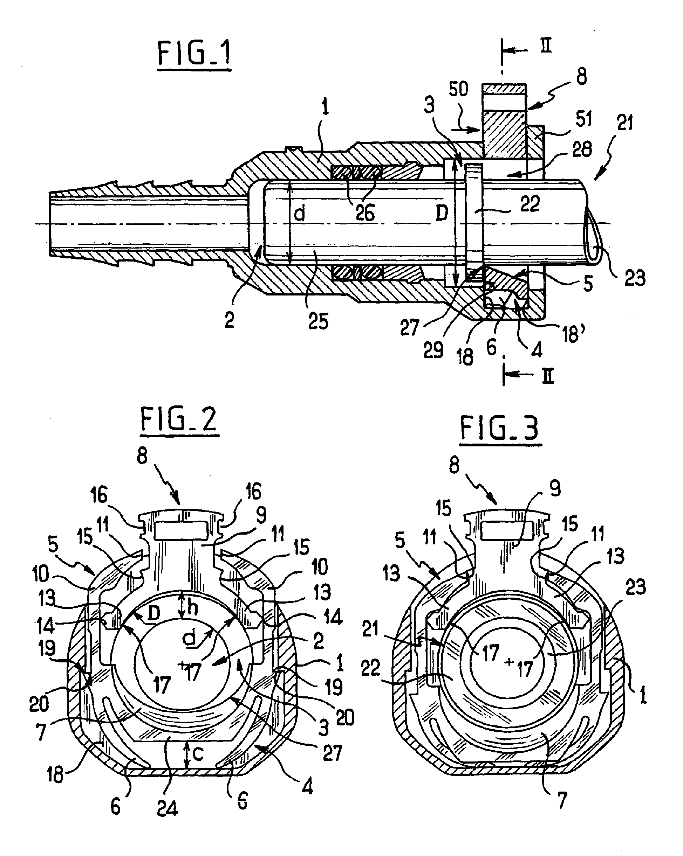

Pour des raisons de clarté, la pièce mâle, ainsi que la bague et le témoin de verrouillage n'ont pas été représentés en coupe dans les figures 2 à 6.

En référence à la figure 1, un connecteur selon l'invention comporte une pièce femelle 1 s'étendant selon un axe longitudinal et divisée en plusieurs sections. Une première section 2 de diamètre d est prévue pour recevoir l'embout 25 cylindrique d'une pièce mâle 21. Des joints 26 sont disposés dans la pièce femelle 1 de façon a prendre appui sur l'embout 25 de la pièce mâle 21 en vue d'assurer l'étanchéité de la connexion. Une deuxième section 3 de diamètre D plus important est prévue pour recevoir une collerette 22 extérieure de la pièce mâle 21. La section 3 est pourvue d'un logement 4 délimité par deux fonds plans 18, 18' perpendiculaires à l'axe de la pièce femelle 1 et formant un couloir pour le coulissement radial d'une bague 5 dans le logement 4. Selon l'invention, le logement 4 reçoit également un témoin de verrouillage 8 qui sera détaillé plus loin.

Ainsi que cela est plus visible à la figure 2, la bague 5 comporte de façon connue en soi des languettes élastiques 6 prenant appui sur le fond du logement 4 et exerçant un effort de rappel dans une position de repos de la bague 5 définie par la coopération de redans 19 du logement 4 avec des redans 20 de la bague 5.

La bague 5 comporte par ailleurs une surface conique 7, s'étendant selon un cône jusqu'à une arête 27 circulaire de diamètre légèrement supérieur au diamètre D de la grande section 3. L'arête 27 délimite une portion d'un orifice de passage 28 circulaire de la collerette 22 à travers la bague 5.

L'orifice de passage 28 n'est ici matérialisé que par l'arête 27, mais il faut l'imaginer comme un orifice virtuel traversant la bague selon un axe parallèle à celui de la pièce femelle 1, s'appuyant sur l'arête 27, et ayant une forme cylindrique d'un diamètre légèrement supérieur à celui de la collerette 22.

Dans la position illustrée à la figure 2, l'orifice de passage 28 est désaxé par rapport à l'axe de la pièce femelle 1.1a surface conique 7 laisse libre le passage de l'extrémité 25 de la pièce mâle dans la section 2, mais forme un obstacle pour l'introduction de la collerette dans la section 3 en aval de la bague 5.

Selon l'invention, la pièce femelle 1 est équipée d'un témoin de verrouillage 8. Le témoin de verrouillage 8 comprend une partie de manoeuvre 9 saillant de la bague 5. A cet effet, la bague 5 est ouverte et présente deux branches 10 dont les extrémités 11 sont en regard des côtés de la partie de manoeuvre 9.

De la partie de manoeuvre 9 s'étendent deux ailes 13 dont les extrémités sont liées à la bague 5 au moyen de ligaments cassables 14. Chaque aile 13 possède une partie d'appui 17 tournée vers l'intérieur du logement 4, de sorte que la partie d'appui 17 soit sensiblement tangeante à un cylindre virtuel de diamètre D s'étendant selon l'axe de la pièce femelle et prolongeant la grande section 3.

La bague 5 et le témoin de verrouillage 8 sont avantageusement venus ensemble de fabrication, par exemple par injection plastique, ce qui facilite leur fabrication et leur mise en place dans le logement 4.

Lorsque les ligaments 14 sont cassés, le témoin de verrouillage 8 est susceptible d'être manoeuvré radialement entre une première position témoin dans laquelle les extrémités 11 des branches 10 de la bague 5 sont encliquetées dans des creux latéraux 15 à la base de la partie de manoeuvre 9, et une seconde position témoin dans laquelle les extrémités 11 sont encliquetées dans des creux latéraux 16 au sommet de la partie de manoeuvre 9.

Lorsque les ligaments 14 ne sont pas cassés, le témoin de verrouillage 8 se trouve dans une position intermédiaire entre les deux positions témoin choisie de sorte que le témoin de verrouillage 8 entrave l'orifice de passage 28. On constate à la figure 2 que le témoin de verrouillage 8 saille de la pièce femelle 1, la partie de manoeuvre 9 étant à moitié enfoncée dans la pièce femelle 1, ce qui permet à l'opérateur de reconnaître immédiatement que le témoin de verrouillage 8 est en position intermédiaire.

A la figure 3, la pièce mâle 21 dont on distingue la collerette 22 et la partie tubulaire 23 est représentée en cours d'introduction. L'extrémité 25 cylindrique non visible ici de la pièce mâle 21 a été glissée entre la bague et le témoin de verrouillage pour être introduite dans la section 2 de la pièce femelle, et la collerette 22 a pu être glissée sous les parties d'appui 17 des ailes 13 du témoin de verrouillage 8, mais a buté contre la surface conique 7 de la bague 5.

En forçant la pièce mâle 21 dans la pièce femelle 1, les ligaments 14 retenant le témoin de verrouillage 8 sur la bague 5 cèdent, ce qui provoque la séparation de la bague 5 et du témoin de verrouillage 8. La bague 5 est alors libre de se déplacer radialement sous l'effet de la poussée de la collerette 22 contre la surface conique 7 qui forme une rampe, et à l'encontre de l'effort de rappel exercé par les languettes flexibles 6, tandis que les parties d'appui 17 du témoin de verrouillage 8 restent en appui contre la périphérie de la collerette 22. La bague 5 se déplace jusqu'à ce que l'arête 27 de la surface conique 7 passe sous la collerette 22, position qui a été illustrée en figure 3. Dans cette position, l'orifice de passage 28 est centré sur l'axe da la pièce femelle 1, et le témoin de verrouillage 8 est retenu par la périphérie de la collerette 22 de sorte qu'il n'entrave pas l'orifice de passage 28. La collerette 22 peut alors passer entre la bague 5 et le témoin de verrouillage 8.

Il est à remarquer que dans cette position, les extrémités 11 des branches 10 de la bague 5 sont encliquetées dans les creux latéraux 15 du témoin de verrouillage, de sorte que le témoin de verrouillage se trouve dans la première position témoin.

Pour faciliter le passage de la collerette entre la bague 5 et le témoin de verrouillage 8, on pourra prévoir des surfaces de cames sur les ailes du témoin de verrouillage au niveau des parties d'appui 17.

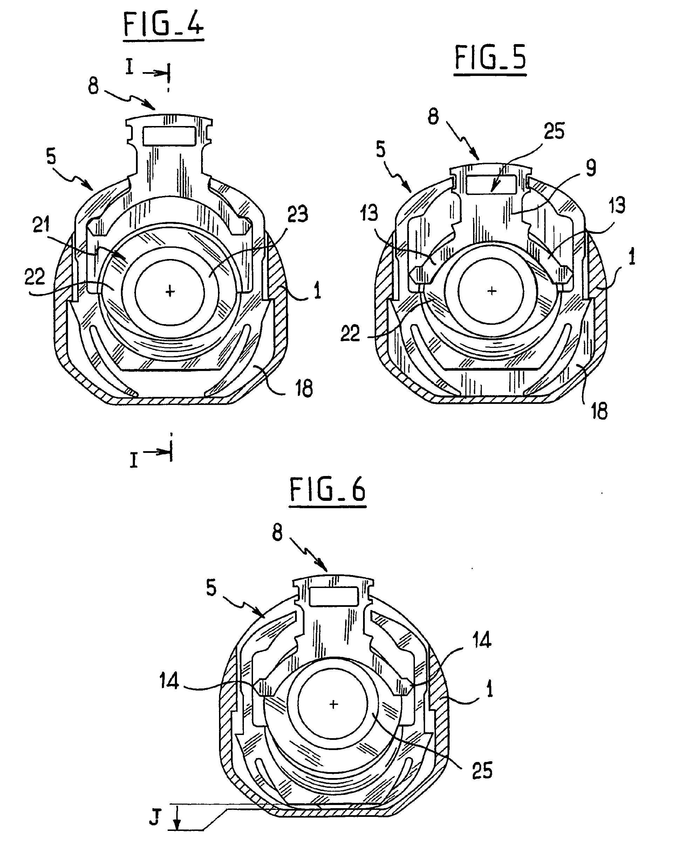

A la figure 6, on a illustré une situation dans laquelle la pièce mâle dont on aperçoit l'embout 25 a été partiellement enfoncée dans la pièce femelle, sans que la collerette 22 ait atteint la bague 5.

Si l'opérateur appuie sur la partie de manoeuvre 9 du témoin de verrouillage 8, l'ensemble bague/témoin va s'enfoncer à l'encontre des languettes flexibles 6, et on constate dans la situation illustrée ici que le témoin bute contre l'embout 25, alors que la bague 5 ne bute pas contre le fond du logement 4, ce qui est illustré sur la figure par le jeu J entre la bague 5 et la fond du logement 4. Les ligaments 14 ne peuvent ainsi être rompus, et lorsque l'opérateur relâche son effort le témoin de verrouillage 8 remonte avec la bague 5 pour revenir dans sa position initiale, c'est à dire la position intermédiaire.

Pour assurer un jeu J entre la bague 5 et le fond du logement 4, il faut, comme cela est visible à la figure 2, que la distance h entre le témoin de verrouillage 8 et l'embout 25 soit inférieure à la course c dans son logement 4.

L'opérateur a ainsi le moyen de constater visuellement que la connexion n'est pas bien réalisée.

A la figure 4, la collerette 22 a dépassé la bague 5, et celle-ci est revenue dans sa position initiale sous l'effet de l'effort de rappel exercé par les languettes flexibles. 6. L'orifice de passage 28 est à nouveau désaxé, le témoin de verrouillage 8 se trouvant alors dans la première position témoin tandis que la partie de manoeuvre 9 est en saillie franche de la pièce femelle 1.

Dans cette position, les branches 10 de la bague sont en regard des fonds plans 18, 18' du logement 4, tandis que la bague 5 possède une partie de paroi 29 en regard de la collerette 22. La bague 5 forme un verrou de la liaison entre la pièce mâle et la pièce femelle, s'opposant au retrait de la pièce mâle. Pour renforcer cette opposition, la bague 5 est équipée d'une bavette 24 qui, quand la bague 5 est en position de repos, s'étend pour être en regard du fond plan 18' du logement 4 non visible sur la figure 4.

Pour confirmer la connexion, l'opérateur appuie sur la partie de manoeuvre 9 du témoin de verrouillage 8, de façon à amener ce dernier dans la position illustrée à la figure 5 qui est la seconde position témoin et dans laquelle les extrémités 11 des branches 10 de la bague 5 sont encliquetées dans les creux latéraux 16 du témoin de verrouillage 8.

Si cette manoeuvre est possible, c'est que la collerette 22 a bien été enfoncée dans la pièce femelle au delà de la bague 5, et que cette dernière a pu revenir dans sa position initiale de repos.

Dans le cas contraire, la collerette 22 va former un obstacle pour les parties d'appui 17 des ailes 13 du témoin de verrouillage 8, et celui-ci ne pourra être enfoncé, ni a fortiori être placé dans la seconde position témoin. L'opérateur décèle immédiatement que la connexion est mal réalisée.

S'il arrivait que la collerette 22 dépasse la bague 5 sans que toutefois celle-ci ne reprenne sa position initiale, par exemple à cause de la présence d'un obstacle ou à cause d'une rupture des languettes flexibles 6, l'opérateur décèle alors visuellement qu'avant toute manoeuvre, le témoin de verrouillage 8 est resté dans une position proche de la position intermédiaire, au lieu de se déplacer vers la première position témoin. Si l'opérateur ne sans apercevait pas, il tenterait de pousser le témoin de verrouillage 8 vers la seconde position témoin, mais ne pourrait l'y encliqueter. L'opérateur décèle alors également que la connexion est mal réalisée.

Dans la seconde position témoin, le témoin de verrouillage 8 ne saille quasiment plus de la pièce femelle 1, à la différence des trois situations décrites aux figures 2 à 4. L'observation de la position du témoin de verrouillage permet donc au premier coup d'oeil de vérifier si la connexion a été bien réalisée et confirmée par l'opérateur.

Le témoin de verrouillage joue donc le rôle d'un témoin visuel de la bonne connexion.

On aura agencé les creux latéraux 15 et 16 ainsi que l'extrémité 11 des branches 10 de la bague 5 de sorte que l'effort nécessaire pour désencliqueter le témoin de verrouillage 8 de la première position témoin et l'effort nécessaire pour encliqueter le témoin de verrouillage 8 dans la seconde position témoin soient inférieurs à l'effort nécessaire pour faire fléchir les languettes flexibles 6 de la bague 5.

Par ailleurs, le déplacement du témoin de verrouillage 8 dans la seconde position témoin permet de renforcer la résistance au retrait de la pièce mâle de la pièce femelle. En effet, ainsi que cela est visible à la figure 5, la plus grande partie des ailes 13 et la base de la partie de manoeuvre 9 du témoin de verrouillage 8 sont en regard de la collerette 22 et saillent donc dans l'orifice de passage 28 de la bague 5, tandis que les extrémités des ailes 13 et la portion supérieure de la partie de manoeuvre 9 du témoin de verrouillage 8 sont en regard des fonds 18,18' du logement 4. Le témoin de verrouillage constitue donc un obstacle pour le retrait de la pièce mâle 21 de la pièce femelle 1.

Le témoin de verrouillage 8 joue donc également le rôle d'un verrou, ajoutant ses effets à celui de la bague 5 pour augmenter la résistance à l'arrachement de la pièce mâle de la pièce femelle.

Pour déconnecter la pièce mâle de la pièce femelle, il faut replacer le témoin de verrouillage dans la première position témoin. Comme la partie de manoeuvre 9 est enfoncée dans le logement 4, il n'est pas possible de manoeuvrer le témoin de verrouillage 8 à la main. Il faut introduire l'extrémité d'un outil dans une fente 25 ménagée en extrémité de la partie de manoeuvre 9 du témoin de verrouillage 8 et tirer sur le témoin de verrouillage 8 pour le ramener dans la première position témoin. Il n'est donc pas possible de replacer de manière involontaire le témoin de verrouillage 8 dans la première position témoin après qu'il ait été placé dans la seconde position témoin.

Il est à remarquer que la fente 25 n'est accessible que par l'arrière de la bague 5, comme indiqué à la figure 1 par la flèche 50. En effet, lorsque le témoin de verrouillage 8 est dans la deuxième position témoin, la fente 25 est au niveau de la flèche 50, et on constate que son accès par l'autre côté est empêché par la présence d'une extension 51 de la pièce femelle destinée à augmenter la surface d'appui du témoin de verrouillage 8 contre la pièce femelle 1.

Puis il faut appuyer sur les branches 10 de la bague 5 pour escamoter la bague jusqu'à une position similaire à celle illustrée à la figure 2. La collerette 22 peut alors passer entre la bague 5 et le témoin de verrouillage 8.

L'invention n'est pas limitée au mode particulier de réalisation qui vient d'être décrit, mais bien au contraire entend couvrir toute variante qui entre dans le cadre de l'invention tel que défini par les revendications.

En particulier, bien que l'on ait indiqué que le témoin de verrouillage et la bague sont venus ensemble de fabrication, l'invention s'applique encore à un témoin de verrouillage indépendant de la bague. Dans ce cas, le témoin de verrouillage peut également être maintenu dans la position intermédiaire par des moyens d'encliquetage, ou par un léger point de colle au niveau des extrémités des branches du témoin de verrouillage. La position intermédiaire peut également ne pas exister, le témoin de verrouillage étant placé d'office dans la première position témoin au montage, ou avant l'introduction de la pièce mâle.

Bien que l'on ait parlé d'encliquetage du témoin de verrouillage sur la bague dans les première et deuxième positions témoin, l'invention s'applique plus généralement à un témoin de verrouillage et à une bague comportant des moyens d'immobilisation mutuelle. Par exemple, on pourra envisager un simple freinage dans la première position témoin, car le témoin n'a pas vocation à y être maintenu longtemps, tandis qu'on pourra envisager un verrouillage positif dans la seconde position témoin, par exemple par interposition d'un organe de clavetage du type goupille, ou équivalent.

## Revendications

1. Connecteur rapide comprenant une pièce femelle (1) avec un alésage étagé dont une première section (2) peut accueillir à étanchéité un embout (25) d'une pièce mâle (21), et dont une deuxième section (3) de grand diamètre peut accueillir une collerette (22) extérieure de la pièce mâle (21) au-delà d'un verrou, le verrou étant constitué d'une bague (5) comportant un orifice de passage (28) de la collerette (22) ayant un diamètre proche de celui de la collerette (22), la bague (5) étant montée dans un logement (4) ménagé dans la pièce femelle (1) au niveau de la section de grand diamètre (3) de son alésage pour coulisser radialement dans le logement (4) entre une première position de repos et de verrouillage où l'orifice de passage (28) de la bague (5) est excentré par rapport à l'axe de l'alésage et une seconde position escamotée où l'orifice de passage (28) est sensiblement coaxial avec cet alésage, **caractérisé en ce que** le verrou comporte un témoin de verrouillage (8) monté à coulissement radial dans la bague (5).

2. Connecteur rapide selon la revendication 1, **caractérisé en ce que** le témoin de verrouillage (8) est mobile dans la bague entre une première position témoin attestant du passage de la collerette (22) au delà de la bague (5) et une seconde position témoin attestant du bon verrouillage de la pièce mâle (21), le témoin restant solidaire de la bague (5) dans chacune des positions témoins.

3. Connecteur rapide selon la revendication 2, **caractérisé en ce que** dans la première position témoin, le témoin de verrouillage (8) n'entrave pas l'orifice de passage (28) de la bague (5), et dans la seconde position témoin, le témoin de verrouillage (8) entrave ledit orifice de passage (28) pour former un obstacle au passage de la collerette (22) et ainsi participer au verrouillage.

4. Connecteur rapide selon la revendication 2 ou la revendication 3, **caractérisé en ce que** le témoin de verrouillage (8) et la bague (5) comportent des moyens d'immobilisation (11,15) mutuelle lorsque le témoin de verrouillage se trouve dans l'une ou l'autre des positions témoins.

5. Connecteur rapide selon l'une des revendications 2 à 4, **caractérisé en ce que** préalablement à une première connexion, le témoin de verrouillage (8) et la bague (5) sont solidaires l'un de l'autre au moyen d'une liaison temporaire dans une position intermédiaire entre les deux positions témoins, choisie de telle sorte que le témoin de verrouillage (8) entrave l'orifice de passage de la bague (5).

6. Connecteur rapide selon la revendication 5, **caractérisé en ce que** la liaison temporaire est constituée par des ligaments (14) joignant la bague (5) et le témoin de verrouillage (8), ces ligaments (14) étant rompus à la première connexion au passage de la collerette (22) entre la bague (5) et le témoin de verrouillage (8).

7. Connecteur rapide selon la revendication 5 ou la revendication 6, **caractérisé en ce que** lorsque le témoin de verrouillage (8) est maintenu sur la bague (5) dans la position intermédiaire, la distance (h) entre le témoin et l'embout (25) de la pièce mâle (21) est inférieure à une course (c) de déplacement de la bague (5) dans le logement (4).

8. Connecteur rapide selon l'une des revendications 2 à 7, **caractérisé en ce que** le témoin de verrouillage (8) comporte une partie de manoeuvre (9) en saillie extérieure de la bague (5) lorsque le témoin de verrouillage (8) est dans la première position, et sensiblement escamoté dans la pièce femelle (1) lorsque le témoin de verrouillage (8) est dans la seconde position.

9. Connecteur selon la revendication 8, **caractérisé en ce que** la partie de manoeuvre comporte une ouverture (25) d'introduction d'un outil de manoeuvre, l'ouverture (25) étant accessible lorsque le témoin de verrouillage (8) est dans la seconde position témoin.

10. Connecteur rapide selon l'une des revendications 2 à 9, **caractérisé en ce que** le témoin de verrouillage comporte des ailes (13) s'étendant de la partie de manoeuvre (9) vers l'intérieur du logement (4) de la bague, les ailes étant partiellement en regard de parois de fond (18,18') du logement (4) au moins lorsque le témoin de verrouillage (8) est dans la seconde position témoin.

## Claims

1. A quick connector comprising a female part (1) with a stepped bore having a first section (2) suitable for sealingly receiving an endpiece (25) of a male part (21), and a second section (3) of larger diameter suitable for receiving an external collar (22) of the male part (21) beyond a latch, the latch being constituted by a ring (5) having a through orifice (28) for passing the collar (22) and of diameter close to the diameter of the collar (22), the ring (5) being mounted in a housing (4) formed in the female part (1) in the larger-diameter section (3) of its bore to slide radially in the housing (4) between a rest and locking first position in which the through orifice (28) in the ring (5) is off-center from the axis of the bore, and a retracted, second position, in which the through orifice (28) is substantially coaxial with the bore, the connector being **characterized in that** the latch includes a locking indicator (8) mounted to slide radially in the ring (5).

2. A quick connector according to claim 1, **characterized in that** the locking indicator (8) is movable in the ring between a first reference position indicating that the collar (22) has gone past the ring (5), and a second reference position indicating that the male part (21) has been locked properly, the indicator remaining secured to the ring (5) in each of the reference positions.

3. A quick connector according to claim 2, **characterized in that** in the first reference position, the locking indicator (8) does not obstruct the through orifice (28) of the ring (5), and in the second reference position, the locking indicator (8) obstructs said through orifice (28) so as to form an obstacle to the collar (22) passing therethrough, thereby contributing to locking.

4. A quick connector according to claim 2 or claim 3, **characterized in that** the locking indicator (8) and the ring (5) include means (11, 15) for preventing them from moving relative to each other when the locking indicator is in one or the other of the reference positions.

5. A quick connector according to any one of claims 2 to 4, **characterized in that** prior to making a first connection, the locking indicator (8) and the ring (5) are secured to each other by means of a temporary connection in an intermediate position between the first and second reference positions, the intermediate position being selected in such a manner that the locking indicator (8) obstructs the through orifice in the ring (5).

6. A quick connector according to claim 5, **characterized in that** the temporary connection is constituted by ligaments (14) joining the ring (5) to the locking indicator (8), the ligaments (14) being broken on first connection when the collar (22) passes between the ring (5) and the locking indicator (8).

7. A quick connector according to claim 5 or claim 6, **characterized in that** when the locking indicator (8) is held to the ring (5) in the intermediate position, the distance (h) between the locking indicator and the endpiece (25) of the male part (21) is less than a displacement stroke (c) of the ring (5) in the housing (4).

8. A quick connector according to any one of claims 2 to 7, **characterized in that** the locking indicator (8) includes a drive portion (9) projecting outside the ring (5) when the locking indicator (8) is in the first position, and substantially retracted into the female part (1) when the locking indicator (8) is in the second position.

9. A connector according to claim 8, **characterized in that** the drive portion has an opening (25) for receiving a driving tool, the opening (25) being accessible when the locking indicator (8) is in the second reference position.

10. A quick connector according to any one of claims 2 to 9, **characterized in that** the locking indicator includes flanges (13) extending from the drive portion (9) towards the inside of the housing (4) for the ring, the flanges facing in part end walls (18, 18') of the housing (4), at least when the locking indicator (8) is in the second reference position.

## Patentansprüche

1. Schnellverbinder, umfassend ein weibliches Teil (1) mit einer gestuften Bohrung, von der ein erster Abschnitt (2) auf dichte Weise einen Anschlussstutzen (25) eines männlichen Teils (21) aufnehmen kann, und von der ein zweiter Abschnitt (3) mit großem Durchmesser einen äußeren Kragen (22) des männlichen Teils (21) jenseits eines Riegels aufnehmen kann, wobei der Riegel aus einem Ring (5) gebildet ist, der eine Durchtrittsöffnung (28) für den Durchtritt des Kragens (22) umfasst, die einen Durchmesser nahe dem des Kragens (22) hat, wobei der Ring (5) in einer Aufnahme (4), die in dem weiblichen Teil (1) in dem Bereich des Bohrungsabschnitts (3) mit großem Durchmesser ausgebildet ist, derart gelagert ist, dass er sich in der Aufnahme (4) zwischen einer ersten Ruhe- und Verriegelungsstellung, in der die Durchtrittsöffnung (28) des Rings (5) in Bezug auf die Achse der Bohrung exzentrisch angeordnet ist, und einer zweiten eingefahrenen Stellung radial verschieben kann, in der die Durchtrittsöffnung (28) im Wesentlichen koaxial zu dieser Bohrung ist, **dadurch gekennzeichnet, dass** der Riegel einen Verriegelungsanzeiger (8) umfasst, der in dem Ring (5) radial verschiebbar gelagert ist.

2. Schnellverbinder nach Anspruch 1, **dadurch gekennzeichnet, dass** der Verriegelungsanzeiger (8) in dem Ring zwischen einer ersten Anzeigestellung, die den Durchtritt des Kragens (22) über den Ring (5) hinaus bestätigt, und einer zweiten Anzeigestellung beweglich ist, die die korrekte Verriegelung des männlichen Teils (21) bestätigt, wobei der Anzeiger in jeder der Anzeigestellungen fest mit dem Ring (5) verbunden bleibt.

3. Schnellverbinder nach Anspruch 2, **dadurch gekennzeichnet, dass** der Verriegelungsanzeiger (8) in der ersten Anzeigestellung die Durchtrittsöffnung (28) für den Durchtritt des Rings (5) nicht behindert, und der Verriegelungsanzeiger (8) in der zweiten Anzeigestellung die Durchtrittsöffnung (28) behindert, um gegenüber dem Durchtritt des Kragens (22) ein Hindernis zu bilden und so an der Verriegelung mitzuwirken.

4. Schnellverbinder nach Anspruch 2 oder Anspruch 3, **dadurch gekennzeichnet, dass** der Verriegelungsanzeiger (8) und der Ring (5) Mittel (11, 15) zur gegenseitigen Blockierung umfassen, um sich gegenseitig zu blockieren, wenn sich der Verriegelungsanzeiger in der einen oder der anderen der Anzeigestellungen befindet.

5. Schnellverbinder nach einem der Ansprüche 2 bis 4, **dadurch gekennzeichnet, dass** der Verriegelungsanzeiger (8) und der Ring (5) vor einem ersten Verbinden durch eine temporäre Verbindung in einer Zwischenstellung zwischen den beiden Anzeigestellungen fest miteinander verbunden sind, wobei die Zwischenstellung so gewählt ist, dass der Verriegelungsanzeiger (8) die Durchtrittsöffnung für den Durchtritt des Rings (5) behindert.

6. Schnellverbinder nach Anspruch 5, **dadurch gekennzeichnet, dass** die temporäre Verbindung aus Bändern (14) gebildet ist, die den Ring (5) und den Verriegelungsanzeiger (8) verbinden, wobei diese Bänder (14) bei dem ersten Verbinden beim Durchtritt des Kragens (22) zwischen dem Ring (5) und dem Verriegelungsanzeiger (8) durchbrochen werden.

7. Schnellverbinder nach Anspruch 5 oder Anspruch 6, **dadurch gekennzeichnet, dass** der Verriegelungsanzeiger (8) an dem Ring (5) in einer Zwischenstellung gehalten wird, wobei der Abstand (h) zwischen dem Anzeiger und dem Anschlussstutzen (25) des männlichen Teils (21) geringer als ein Verschiebungshub (c) des Ringes (5) in der Aufnahme (4) ist.

8. Schnellverbinder nach einem der Ansprüche 2 bis 7, **dadurch gekennzeichnet, dass** der Verriegelungsanzeiger (8) einen Betätigungsabschnitt (9) umfasst, der vom Ring (5) nach außen vorsteht, wenn der Verriegelungsanzeiger (8) in der ersten Stellung ist, und im Wesentlichen in das weibliche Teil (1) eingefahren ist, wenn der Verriegelungsanzeiger (8) in der zweiten Stellung ist.

9. Schnellverbinder nach Anspruch 8, **dadurch gekennzeichnet, dass** der Betätigungsabschnitt eine Öffnung (25) zum Einführen eines Betätigungswerkzeugs umfasst, wobei die Öffnung (25) zugänglich ist, wenn der Verriegelungsanzeiger (8) in der zweiten Anzeigestellung ist.

10. Schnellverbinder nach einem der Ansprüche 2 bis 9, **dadurch gekennzeichnet, dass** der Verriegelungsanzeiger Flügel (13) umfasst, die sich von dem Betätigungsabschnitt (9) ins Innere der Aufnahme (4) des Rings erstrecken, wobei sich die Flügel teilweise gegenüber von Bodenwänden (18, 18') der Aufnahme (4) befinden, zumindest wenn der Verriegelungsanzeiger (8) in der zweiten Anzeigestellung ist.
